# EUROPÄISCHE PATENTSCHRIFT

(11) **EP 1 496 749 B1**
(45) Veröffentlichungstag und Bekanntmachung des Hinweises auf die Patenterteilung: **14.03.2007**
(21) Anmeldenummer: 03725008.1
(22) Anmeldetag: 11.04.2003
(51) Int. Cl.: A22C 13/00

(54) **SCHLAUCHFÖRMIGE NAHRUNGSMITTEL-DOPPELHÜLLE MIT ÜBERTRAGBAREN BESTANDTEILEN**
TUBULAR DOUBLE FOOD CASING COMPRISING TRANSFERABLE COMPONENTS
DOUBLE ENVELOPPE TUBULAIRE A COMPOSANTS TRANSFERABLES POUR DENREE ALIMENTAIRE

(30) Priorität: 17.04.2002 DE 10217132
(43) Veröffentlichungstag der Anmeldung: 19.01.2005
(73) Patentinhaber: Kalle GmbH, 65203 Wiesbaden (DE)
(72) Erfinder: KÖNIG, Martina, 65207 Wiesbaden (DE); AUF DER HEIDE, Christian, 49080 Osnabrück (DE); AUF DER HEIDE, Dirk, 45954 Alfhausen (DE); KALLWEIT, Jürg-Heinrich, 49076 Osnabrück (DE)
(74) Vertreter: Plate, Jürgen
(86) Internationale Anmeldenummer: PCT/EP2003/003766
(87) Internationale Veröffentlichungsnummer: WO 2003/086087

(56) Entgegenhaltungen:
- EP-A- 0 471 147
- EP-A- 0 986 957
- EP-A- 0 992 194
- EP-A- 1 192 864
- WO-A-03/028470
- DE-A- 2 312 385
- DE-A- 19 500 470
- US-A- 3 361 577
- US-A- 4 346 738
- DATABASE WPI Section Ch, Week 200035 Derwent Publications Ltd., London, GB; Class A92, AN 2000-404182 XP002251517 & JP 2000 139401 A (OSAKA KAGAKU GOKIN KK) , 23. Mai 2000 (2000-05-23) in der Anmeldung erwähnt

## Beschreibung

Die Erfindung betrifft eine schlauchförmige Nahrungsmittelhülle, von der Bestandteile auf das darin befindliche Nahrungsmittel übertragen werden können, und ein Verfahren zur Herstellung hiervon.

Nahrungsmittelhüllen, speziell Wursthüllen, bestehen häufig aus Naturdarm oder aus Kollagen, das ebenfalls aus tierischen Quellen gewonnen wird. Nach dem Auftreten von Tierseuchen (BSE) bestehen jedoch Vorbehalte gegen Hüllen aus solchem Material. Nahrungsmittel im Natur- oder Collagendarm lassen sich allerdings im allgemeinen gut räuchern.

Verbreitet sind daneben Hüllen aus gegebenenfalls faserverstärkter regenerierter Cellulose oder aus synthetischen Polymeren. Hüllen aus regenerierter Cellulose werden jedoch in aufwendigen und umweltbelastenden Verfahren hergestellt. Hüllen aus synthetischen Polymeren wiederum sind meist wenig durchlässig für Sauerstoff und/oder Wasserdampf. Sie sind in der Regel undurchlässig für Kalt- oder Heißrauch. Hüllen aus anderem Material, beispielsweise aus eiweiß- oder acrylatbeschichtetem Gewebe, haben bisher nur eine geringe Bedeutung erlangt.

Bekannt sind auch Hüllen aus thermoplastischer Stärke oder einem thermoplastischen Stärkederivat (EP-A 709 030). Die Stärke oder das Stärkederivat sind dabei in der Regel abgemischt mit einem durch Polykondensation oder Polyaddition erhältlichen Polymer (EP-A 1 054 599), insbesondere mit einem Polyesterurethan (DE-A 198 22 979).

Ebenfalls bekannt sind Nahrungsmittelhüllen mit einer Beschichtung, deren Inhaltsstoffe auf das Nahrungsmittel übertragbar sind. So sind in der WO 98/31731 und in der EP-A 986 957 Folien offenbart, die auf der dem Nahrungsmittel zugewandten Seite eine Schicht aufweisen, die eine Geschmacks- oder Aromakomponente enthält sowie ein Polysaccharid oder Protein als Bindemittel. Die Trägerschicht der Folien besteht aus Polyolefin, Polyamid, Polyester, Polyvinylidenchlorid (PVDC), Polyvinylchlorid (PVC) oder Polystyrol.

In der JP-A 139401/2000 ist eine Folie beschrieben, mit der sich Nahrungsmittelfarbe auf Wurstbrät, Schinken oder ähnliche Lebensmittel übertragen läßt. Erreicht wird das mit einer Beschichtung, die neben dem Lebensmittelfarbstoff noch einen eßbaren Weichmacher, wie Glycerin, Sorbit oder Propylenglykol enthält.

Gegenstand der DE-A 198 46 305 ist eine Barrierehülle aus einem Kunststoffmaterial, wobei die Hülle auf der Innenseite eine Lage aus einem saugfähigen Material (Gewebe, Gewirke oder Gestricke) aufweist, die mit Farb- oder Aromastoffen getränkt ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Sie wird im allgemeinen aus einer entsprechenden Flachfolien durch Heißsiegeln oder Kleben hergestellt.

Bereits beschrieben sind auch schlauchförmige Nahrungsmittelhüllen auf Cellulosebasis, die auf der dem Lebensmittelmittel zugewandten Seite Rauch und/oder Gewürze tragen. Diese Hüllen haben eine hohe Durchlässigkeit für Wasserdampf und Sauerstoff. Ein in der Hülle befindliches Nahrungsmittel trocknet daher relativ schnell aus und ist nur kurze Zeit haltbar.

All die bekannten Hüllen mit Innenlagen oder Innenbeschichtungen, die einen übertragbaren Nahrungsmittelzusatzstoff enthalten, haben meist den Nachteil, daß entweder ihre Herstellung technisch sehr aufwendig ist oder daß sie die Nahrungsmittelzusatzstoffe nicht in ausreichender Menge übertragen können.

Es bestand daher die Aufgabe, eine nahtlose, schlauchförmige Lebensmittelhülle zur Verfügung zu stellen, die gute Barriereeigenschaften aufweist, insbesondere eine hohe Barriere für Sauerstoff und Wasserdampf, und mit der sich Farb-, Aroma- oder Geschmacksstoffe gleichmäßig in ausreichend hoher Menge auf ein mit der Hülle in Kontakt befindliches Lebensmittel übertragen lassen. Die Hülle soll einfach und kostengünstig herstellbar sein, möglichst ohne Kleben oder Laminieren. Sie soll sich so konfektionieren lassen, daß sie ohne weiteres (insbesondere ohne Vorwässern) gefüllt werden kann. Die Hülle soll insbesondere bei der Herstellung von Stapelaufschnitt verwendet werden können.

Gelöst wurde die Aufgabe mit einer Doppelhülle, d.h. einer Hülle, die zwei übereinander liegende, nur in ihrem jeweiligen Anfangsbereich mechanisch miteinander verbundene Hüllen umfaßt. Dabei übernimmt die äußere Hülle im wesentlichen die Barrierefunktion und verleiht der Gesamtkonstruktion auch den überwiegenden Anteil an mechanischer Stabilität, während die innere Hülle als intermediärer Träger für den Nahrungsmittelzusatzstoff dient.

Gegenstand der vorliegenden Anmeldung ist demgemäß eine schlauchförmige Nahrungsmittelhülle, von der Bestandteile auf das darin befindliche Nahrungsmittel übertragen werden können, die dadurch gekennzeichnet ist, daß sie eine außenliegende, schlauchförmige Barrierehülle und eine innenliegende schlauchförmige Hülle umfaßt, die mindestens einen übertragbaren Farb-, Aroma- und/oder Geschmacksstoff enthält oder trägt.

Außen- und innenliegende Hüllen haben in etwa das gleiche Füllkaliber, so daß sie nach dem Füllen glatt und faltenfrei aneinander bzw. am Füllgut anliegen.

Die äußere Hülle ist bevorzugt eine nahtlose, ein- oder mehrschichtige Hülle aus Polymermaterial mit einer geringen Durchlässigkeit für Wasserdampf, Sauerstoff und Aromastoffe, z. B. Räucheraromastoffe.

Die äußere Hülle ist so beschaffen, daß sie das Austrocknen des Lebensmittels während der Lagerung wirksam verhindert und gleichzeitig den Luftsauerstoff fernhält. Diese Aufgabe kann durch eine (einlagige) Hülle auf Basis von Polyamid, Polyolefin, Polyester, Polyvinylidenchlord (PVDC), Polyvinylchlorid (PVC), Polystyrol oder von entsprechenden Copolymeren erfüllt werden. Bevorzugt ist eine Hülle auf Basis von Polyamid oder Polyolefin. Dabei ist jedoch zu berücksichtigen, daß Polyamidschichten eine hohe Sauerstoffbarriere, jedoch nur eine relativ geringe Wasserdampfbarriere zeigen. Bei Polyolefinschichten verhält es sich genau umgekehrt. Wenn eine besonders hohe Barrierewirkung erzielt werden soll, ist es daher zweckmäßig, gleichzeitig mindestens eine Polyamid- und mindestens eine Polyolefinschicht vorzusehen.

Bevorzugt ist die äußere Hülle daher eine mehrschichtige Hülle mit mindestens einer sauerstoffsperrenden Schicht auf Polyamidbasis und mindestens einer wasserdampfsperrenden Schicht auf Polyolefinbasis. Besonders bevorzugt ist eine dreischichtige Hülle; bei der die wasserdampfsperrende Schicht die zentraler. Schicht bildet, die von sauerstoffsperrenden Schichten umgeben ist. Geeignete polyolefinische Materialien für die wasserdampfsperrende zentrale Schicht sind insbesondere Ethylen/Vinylalkohol (EVOH) und Polyolefine, wie Polyethylen, Polypropylen oder Copolymeren mit Einheiten aus Polyethylen, Polypropylen und/oder α-Olefinen mit 4 bis 8 C-Atomen. Geeignet sind insbesondere C₂/C₃- und C₃/C₄-Copolymere, C₂/C₃/C₄-Terpolymere und Mischungen daraus.

Die sauerstoffsperrende Schicht ist vorzugsweise eine Polyamidschicht. Diese kann aliphatisches Polyamid, aliphatisches Copolyamid oder einer Mischung davon enthalten. Beispiele dafür sind Polycaprolactam (PA 6), Polyhexamethylenadipamid (PA 66) und eine Copolyamid aus Caprolactam-, Hexamethylendiamin- und Adipinsäure-Einheiten (PA 6/66). Zusätzlich können die Polyamidschichten teil- oder vollaromatische Polyamide enthalten, beispielsweise ein Copolyamid aus Hexamethylendiamin, Terephthalsäure und Isophthalsäure (PA 6I/6T). Der Anteil der (teil-)aromatischen Polyamide beträgt allgemein nicht mehr als 40 Gew.-%, bezogen auf das Gesamtgewicht der Polyamidschicht. Darüber hinaus können die Polyamidschichten auch noch andere Polymere enthalten, beispielsweise Polyolefine, Polyester oder lonomere. Der Anteil der anderen Polymere beträgt vorzugsweise nicht mehr als 25 Gew.-%, bezogen auf das Gesamtgewicht der betreffenden Polyamidschicht.

Zwischen den Barriereschichten befinden sich zweckmäßig noch relativ dünne (0,5 bis 5 µm) Haftschichten. Sie bestehen aus oder enthalten wenigstens einen Haftvermittler. Die äußere Hülle ist in diesem Fall fünfschichtig. Geeignete Haftvermittler sind insbesondere Pfropfpolymere oder Copolymere (wobei der Begriff "Copolymere" auch Polymere mit mehr als 2 verschiedenen Monomereinheiten umfassen soll) mit Ethylen- und/oder Propylen-Einheiten und Einheiten aus wenigstens einem Comonomer aus der Gruppe bestehend aus (Meth)-acrylsäure, (Meth)acrylsäureester, Vinylacetat und Maleinsäureanhydrid. Bevorzugte Comonomere sind insbesondere (C₁-C₆)Alkyl-(meth)acrylate, wie Butylacrylat. Auch gummimodifiziertes Polyethylen ist geeignet. Der Anteil der Einheiten mit funktionellen Gruppen in den Pfropf- oder Copolymeren beträgt allgemein 3 bis 12 Gew.-%, bezogen auf das Gewicht der haftungsvermittelnden Komponente. Die Begriffe "(Meth)acrylsäure" und "-(meth)acrylat" stehen stehen dabei für Acrylsäure und/oder Methacrylsäure bzw. -acrylat und/oder -methacrylat. Der Haftvermittler kann auch Bestandteil der bereits genannten Polyamid- und/oder Polyolefinschicht(en) sein.

Die äußere Hülle hat allgemein eine Dicke von 30 bis 120 µm, bevorzugt von 40 bis 90 µm. Das gilt für die ein wie auch für die mehrschichtige Ausführungsform. Sie ist vorzugsweise in einem Flächenverhältnis von 1:2 bis 1:10 verstreckt, was vorzugsweise durch Blasverformen erreicht wird. Die äußere Hülle hat allgemein eine Sauerstoffdurchlässigkeit von 1 bis 100 cm³/m² bar d, bevorzugt von 1 bis 15 cm³/m² bar d, bestimmt gemäß DIN 53380, und eine Wasserdampfdurchlässigkeit von 1 bis 50 g/m² d, bevorzugt von 1 bis 10 g/m² d, bestimmt gemäß DIN 53122. Um die Nahrungsmittelhülle besser raffen und später auch besser füllen zu können, kann sie außen mit einem Öl oder Schmiermittel versehen sein, wie Paraffinöl oder Glycerin. Daneben kann die äußere Hülle auch füllfertig vorbefeuchtet sein (Polyamidschichten beispielsweise nehmen bis zu etwa 8 Gew.-% an Wasser auf). Durch die Vorbefeuchtung wird die äußere Hülle zudem geschmeidiger.

Die mit dem Nahrungsmittel in Berührung kommende Hülle trägt nicht notwendig zur mechanischen Stabilität der Gesamtkonstruktion bei. Sie muß aber in jedem Fall so stabil sein, daß sie beim Füllen nicht reißt. Sie weist im allgemeinen keine oder nur geringe Barriereeigenschaften für Wasserdampf, Sauerstoff und Aromastoffe (wie Flüssigrauch) auf. Je nach Art der zu übertragenden Nahrungsmittelzusatzstoffe kann diese innere Hülle aus regenerierter Cellulose, einem Gemisch aus thermoplastischer Stärke und/oder einem thermoplastischen Stärkederivat und anderen Polymeren (inbesondere Polyurethan), aus Papier, Textil-oder Vliesstoff hergestellt sein. In einer bevorzugten Ausführungsform ist das mit der thermoplastischen Stärke oder dem Stärkederivat vermischte weitere Polymer ein thermoplastisches Polyesterurethan, wie es in der DE-A 198 22 979 beschrieben ist. Das thermoplastische Polyesterurethan besteht allgemein aus harten Polyurethan- und weichen Polyester-Segmenten, wobei die Segmente in altemierender Folge angeordnet sind. Als "weich" werden dabei Segmente mit einer Glas-Übergangstemperatur (T_{g}) von -20°C oder darunter bezeichnet, als "hart" dagegen solche mit einer T_{g} von +30 °C oder darüber. Das Polyesterurethan kann aliphatischer oder aromatischer Natur sein. DerAnteil der Polyurethansegmente in dem thermoplastischen Polyesterurethan beträgt dabei 10 bis 90 Gew.-%, bevorzugt 20 bis 50 Gew.-%, jeweils bezogen auf das Gesamtgewicht des Polyesterurethans. Sie bestehen meist aus Diisocyanat- und Diol-Einheiten. Die Diisocyanat-Einheiten können dabei aliphatisch, cycloaliphatisch oder aromatisch sein. Beispiele für aliphatische Diisocyanate sind Butan-1,4-diisocyanat und Hexan-1,6-diisocyanat. Isophorondiisocyanat (= 3-Isocyanatomethyl-3,5,5-trimethyl-cyclohexan-isocyanat) ist ein Beispiel für ein cycloaliphatisches Diisocyanat. Toluol-2,4- und -2,6-diisocyanat, Diphenylmethan-2,2'-, -2,4'-, -2,6'- und -4,4'-diisocyanat sowie Naphthalin-1,5-diisocyanat sind bevorzugte aromatische Diisocyanate. Wichtig ist allein, daß die innere Hülle die Stoffe, die auf das Nahrungsmittel übertragen werden sollen, speichern oder halten kann und zwar auch dann, wenn die Hülle gerafft ist.

Die innere Hülle kann auch aus einem bahnförmigen Flachmaterial hergestellt werden, das mit einem oder mehreren zu übertragenden Stoffen beaufschlagt und dann zu einem Schlauch geformt wird. Diese Vorgehensweise ist besonders günstig, weil Zusatzstoffe auf einer flachen Materialbahn verfahrenstechnisch wesentlich einfacher und kostengünstiger aufgebracht werden können als auf der Innenseite eines schlauchförmigen Materials. Fixiert werden kann der aus der Flachbahn geformte Schlauch durch Kleben, Siegeln oder Nähen der überlappenden Ränder oder auf andere, dem Fachmann geläufige Arten. Die innere Hülle kann demzufolge eine Naht aufweisen. Die Wandstärke der inneren Hülle ist materialabhängig. Sie beträgt allgemein 30 bis 200 µm, bevorzugt 40 bis 100 µm. Faserverstärkte Cellulosehüllen haben allgemein eine Wandstärke von 50 bis 80 µm (bevor sie mit Flüssigrauch oder anderen Stoffen beaufschlagt werden).

Der von der inneren Hülle auf das Lebensmittel (insbesondere das Wurstbrät) übertragbare Stoff kann ein Farb-, Aroma- und/oder Geschmacksstoff sein, beispielsweise ein Gewürz oder eine Gewürzmischung (wie Pfeffer in ganzen Körnern, in groben Stücken oder fein gemahlen), ein Gewürzextrakt, Flüssig- oder Trockenrauch, der auch modifiziert sein kann (beispielsweise durch Zusatz von alkalisch wirkenden Mitteln und/oder von viskositätssteigernden Mitteln oder durch Entzug von Teerbestandteilen), ein natürliches oder synthetisches Aroma, ein Geschmacksverstärker (z.B. Glutamin) oder ein anderer Lebensmittelzusatzstoff. Flüssigrauch beispielsweise zieht normalerweise in die innere Hülle ein. Für Flüssigrauch eignen sich besonders (nahtlose) faserverstärkte Hüllen auf Basis von regenerierter Cellulose. Solche Hüllen sind bekannt und kommerziell erhältlich. Feste Stoffe sind dagegen in der Regel an der Oberfläche der inneren Hülle gebunden, zweckmäßig mit Hilfe von Bindemitteln. Weiterhin kann es zweckmäßig sein, zu übertragende Stoffe (insbesondere feste Stoffe) mit einem Bindemittel abzumischen oder sie damit zu umgeben.

Dementsprechend ist in einer bevorzugten Ausführungsform der übertragbare Farb-, Aroma- oder Geschmacksstoff kombiniert mit einem lebensmittelrechtlich zugelassenen Bindemittel, insbesondere einem Polysaccharid (wie Stärke), einer modifizierten Stärke (wie Carboxymethylstärke), Dextran, Pullulan, Traganthgummi, Xanthangummi, Gummi arabicum, Alginat, Methylcellulose, Hydroxyethylcellulose, Hydroxypropylcellulose, Carboxymethylcellulose, Chitin, Chitosan, einem Protein (wie Gluten), Pektin, Carrageenan, Guar oder Gelatine. Art und Anteil des Bindemittels oder Bindemittelgemisches richten sich nach dem Farb-, Aroma- oder Geschmacksstoff und lassen sich in einfachen Vorversuchen optimieren.

Das Bindemittel kann mit dem Farb-, Aroma- oder Geschmacksstoff vermischt sein. In manchen Fällen, beispielsweise wenn ganze Pfefferkörner oder grob gemahlener Pfeffer übertragen werden soll(en), ist es zweckmäßig, zunächst eine Schicht aus dem Bindemittel vorzusehen und darauf dann die Farb-, Aroma- oder Geschmacksstoffe allein oder vermischt mit einem weiteren Bindemittel aufzubringen. Die Dicke der Bindemittelschicht richtet sich nach der Art der zu übertragenden Komponente.

Um einen gleichmäßigen Transfer der Farb-, Aroma- oder Geschmacksstoffe beim Kochen oder Brühen des Nahrungsmittels zu erreichen, hat es sich zudem als günstig erwiesen, diesen Zusatzstoffen und/oder dem Bindemittel eine Komponente hinzuzufügen, die die Wasserlöslichkeit vermindert. Für diesen Zweck ist Schellack, speziell Blätterschellack, besonders geeignet.

Die Farb-, Aroma- und/oder Geschmacksstoffe können nach einer Reihe von Verfahren auf die schlauchförmige Hülle aufgebracht werden, beispielsweise durch Besprühen, Bedrucken, Walzenantrag, Beflocken, Kalandrieren oder Lackieren. Es können auch mehrere Verfahren kombiniert werden.

Die Herstellung der erfindungsgemäßen Doppelhülle (Tandemhülle) erfolgt allgemein in der Art, daß die innere und die äußere Hülle zunächst - getrennt voneinander - jeweils zu einer Raupe gerafft werden. Die Raupen werden dann unmittelbar hintereinander angeordnet. Der entraffte (d.h. mehr oder weniger glatte) oder nicht geraffte Anfang der inneren Hülle wird durch den Hohlraum der aus der äußeren Hülle geformten Raupe hindurchgeführt. Die Anfangsbereiche der äußeren und der inneren Hülle werden dann miteinander verbunden, beispielsweise durch Verknoten, durch eine Garnbindung oder durch einen Kunststoff- oder Metallclip (den sogenannten Erstclip). Die Verbindung muß wenigstens so fest sein, daß sie sich beim Füllen und Entraffen nicht löst. Die fertige Tandemhülle wird dann vorzugsweise noch mit einer Folienverpackung umgeben. Die Verpackung dient vor allem dazu, ein Brechen der Raupen während des Transports und der weiterer Handhabung zu verhindern. Sie dient ferner dazu, die Nahrungsmittelhüllen vor Kontamination mit Schmutz oder Keimen zu schützen. Diese aus zwei Segmenten bestehende geraffte Nahrungsmittelhülle (Raupe) ist neu und ebenfalls Teil der vorliegenden Erfindung.

Während des Füllvorgangs werden die hintereinander positionierten Raupen gleichzeitig entrafft. Das Füllgut ist nun von zwei Hüllen umgeben, wobei beide Hüllen glatt und faltenfrei aneinander bzw. am Inhalt (beispielsweise Wurstbrät) anliegen. Naturgemäß sollten dazu im wesentlichen gleich lange Abschnitte der äußeren und der inneren Hülle jeweils zu einer Raupe gerafft sein. Das Füllen kann dann auf einer der üblichen halb- oder vollautomatischen Füll-, Portionier- und Clipanlagen erfolgen. Gegebenenfalls wird das Produkt anschließend gekocht oder gegart.

Die erfindungsgemäße Nahrungsmittelhülle eignet sich besonders für die Herstellung von Koch- oder Brühwurst, besonders jedoch zur Herstellung von Stapelaufschnitt. Als Stapelaufschnitt wird allgemein eine Brühwurst von relativ großem Kaliber (etwa 40 bis 65 mm Durchmesser) bezeichnet, die nach dem Brühen in Scheiben geschnitten wird. Dabei wird die Hülle vor dem Schneiden häufig entfernt. Wenn der Stapelaufschnitt in einer Folienverpackung in den Handel gelangen soll, wird die Hülle regelmäßig vorher entfernt.

In den folgenden Beispielen sind Prozente als Gewichtsprozente zu verstehen, soweit nicht anders angegeben oder aus dem Zusammenhang ersichtlich.

### Beispiel 1

Eine Tandemhülle wurde hergestellt aus
a) einer 20 m langen, 3-schichtigen, schlauchförmigen Kunststoffhülle mit einer Flachbreite von 160 mm und einem prinzipiellen Aufbau Polyamid/Polyethylen/Polyamid, gerafft zu einer 25 cm langen Raupe, und
b) einer faserverstärkten, schlauchförmigen Hülle auf Basis von regenerierter Cellulose mit einer Flachbreite von 158 bis 162 mm, imprägniert mit einer Lösung aus

| | |
|---|---|
| 20 I | Flüssigrauch (®Charsol Supreme Hickory von Red Arrow Products Co., USA) |
| 24 I | einer 0,2 %igen wäßrigen Lösung eines Heteropolysaccharids (®Rhodigel 23), |
| 24 l | einer 0,66 %igen wäßrigen Lösung eines braunen Lebensmittelfarbstoffs (Schokobraun Nr. 67775). |
| 6 I | Lecithin, |
| 4 I | ®Tween 80 und |
| 2 I | ®Genapol X 080 |

von der ebenfalls 20 m zu einer Raupe gerafft wurden.

Die Raupen a) und b) wurden unmittelbar hintereinander angeordnet, und der Anfang der mit Flüssigrauch imprägnierten Cellulosehülle b) durch den Hohlraum der von der äußeren Barrierehülle gebildeten Raupe a) hindurchgeführt. Der Anfang der beiden Hüllen wurde anschließend durch einen Clip fest miteinander verbunden. Anschließend wurden die Hüllen auf einer automatischen Füll-, Portionier- und Clipanlage mit Brühwurstbrät gefüllt. Die so erhaltenen Würste wurden danach in der üblichen Weise gebrüht und nach dem Abkühlen geschält. Es zeigte sich, daß die Rauchfarbe gleichmäßig und intensiv auf die Brätoberfläche übergegangen war.

### Beispiel 2

Es wurde eine Tandemhülle gemäß Beispiel 1 hergestellt, wobei die Raupe a) jedoch eine Flachbreite von 180 mm aufwies. Für die Raupe b) wurde ein schlauchförmiger Cellulosefaserdarm (Nalo Faser I) mit einer Restfeuchte von 27 bis 29 % und einer Flachbreite von 174 bis 177 mm innenbeschichtet mit einer Mischung aus

| | |
|---|---|
| 1,70 g | Eiweiß |
| 0,70 g | Alginat |
| 1,80 g | Citral |
| 10,0 g | Paprika-Pulver und |
| 85,8 g | Wasser |

Wie im Beispiel 1 beschrieben wurden die beiden Raupen miteinander kombiniert, mit Brühwurstbrät gefüllt und gebrüht. Nach dem Abkühlen und Abschälen der umgebenden Hüllen zeigte sich, daß die Brätoberfläche wunschgemäß Farbe, Geschmack und Aroma des Paprikas angenommen hatte.

## Patentansprüche

1. Schlauchförmige Nahrungsmittelhülle, von der Bestandteile auf das darin befindliche Nahrungsmittel übertragen werden können, **dadurch gekennzeichnet, daß** sie eine außenliegende schlauchförmigen Barrierehülle und eine innenliegende schlauchförmige Hülle umfaßt, die mindestens einen übertragbaren Farb-, Aroma- und/oder Geschmacksstoffenthält oder trägt, wobei die beiden übereinander liegenden Hüllen nur in ihrem jeweiligen Anfangsbereich mechanisch miteinander verbunden sind.

2. Nahrungsmittelhülle gemäß Anspruch 1, **dadurch gekennzeichnet, daß** die außen- und die innenliegende Hülle in etwa das gleiche Füllkaliber haben.

3. Nahrungsmittelhülle gemäß Anspruch 1 oder 2, **dadurch gekennzeichnet, daß** die äußere Hülle eine nahtlose, ein- oder mehrschichtige Hülle aus Polymermaterial mit einer geringen Durchlässigkeit für Wasserdampf, Sauerstoff und Aromastoffe ist.

4. Nahrungsmittelhülle gemäß einem oder mehreren der Ansprüche 1 bis 3, **dadurch gekennzeichnet, daß** die äußere Hülle eine Sauerstoffdurchlässigkeit von 1 bis 100 cm³/m² bar d, bevorzugt von 1 bis 10 cm³/m² bar d, bestimmt gemäß DIN 53380, und eine Wasserdampfdurchlässigkeit von 1 bis 50 g/m² d, bevorzugt von 1 bis 10 g/m² d, bestimmt gemäß DIN 53122, hat.

5. Nahrungsmittelhülle gemäß einem oder mehreren der Ansprüche 1 bis 4, **dadurch gekennzeichnet, daß** die außenliegende Barrierehülle eine Hülle auf Basis von Polyamid, Polyolefin, Polyester, Polyvinylidenchlord (PVDC), Polyvinylchlorid (PVC), Polystyrol oder von entsprechenden Copolymeren ist.

6. Nahrungsmittelhülle gemäß einem oder mehreren der Ansprüche 1 bis 5. **dadurch gekennzeichnet, daß** die äußere Barrierehülle mehrschichtig ist und mindestens eine Schicht auf Basis von Polyamid und mindestens eine Schicht auf Basis von Polyolefin umfaßt.

7. Nahrungsmittelhülle gemäß einem oder mehreren der Ansprüche 1 bis 6, **dadurch gekennzeichnet, daß** die innere Hülle aus regenerierter Cellulose, einem Gemisch aus thermoplastischer Stärke und/oder einem thermoplastischen Stärkederivat und anderen Polymeren, inbesondere Polyurethan, aus Papier, Textil- oder Vliesstoff hergestellt ist.

8. Nahrungsmittelhülle gemäß einem oder mehreren der Ansprüche 1 bis 7, **dadurch gekennzeichnet, daß** der Farb-, Aroma- und/oder Geschmacksstoff, ein Gewürz oder eine Gewürzmischung, ein Gewürzextrakt, ein Flüssig- oder Trockenrauch, ein natürliches oder synthetisches Aroma und/oder ein Geschmacksverstärker ist.

9. Nahrungsmittelhülle gemäß einem oder mehreren der Ansprüche 1 bis 8. **dadurch gekennzeichnet, daß** der Farb-, Aroma- oder Geschmacksstoff mit einem lebensmittelrechtlich zugelassenen Bindemittel kombiniert ist.

10. Nahrungsmittelhülle gemäß Anspruch 9, **dadurch gekennzeichnet, daß** das Bindemittel ein Polysaccharid, eine modifizierte Stärke, Dextran, Pullulan, Traganthgummi, Xanthangummi, Gummi arabicum, Alginat, Methylcellulose, Hydroxyethylcellulose, Hydroxypropylcollulose, Carboxymethylcellulose. Chitin, Chitosan, ein Protein, Pektin, Carrageenan, Guar oder Gelatine ist.

11. Nahrungsmittelhülle gemäß einem oder mehreren der Ansprüche 1 bis 10, **dadurch gekennzeichnet, daß** dem Farb-, Aroma- oder Geschmacksstoff und/oder dem Bindemittel eine Komponente hinzugefügt ist, die die Wasserlöslichkeit vermindert.

12. Geraffte, schlauchförmige Nahrungsmittelhülle, **dadurch gekennzeichnet, daß** sie zwei unmittelbar hintereinander angeordnete nur in ihren jeweiligen Anfangsbereich mechanisch verbundene, geraffte Segmente umfaßt, wobei das erste Segment aus einer schlauchförmigen Barrierehülle und das zweite aus einer schlauchförmigen Hülle besteht, die mindestens einen übertragbaren Farb-, Aroma- und/oder Geschmacksstoff enthält oder trägt.

13. Geraffte, schlauchförmige Nahrungsmittelhülle gemäß Anspruch 12, **dadurch gekennzeichnet, daß** der entraffte oder nicht geraffte Anfang der zweiten Hülle durch den Hohlraum des ersten Segments geführt und mit dem Anfang der schlauchförmigen Barrierehülle mechanisch fest verbunden ist.

14. Geraffte, schlauchförmige Nahrungsmittelhülle gemäß Anspruch 12 bis 13, **dadurch gekennzeichnet, daß** die Anfänge der beiden Hüllen durch einen Kunststoff- oder Metallclip miteinander verbunden sind.

15. Verfahren zur Herstellung einer schlauchförmigen Nahrungsmittelhülle gemäß den Ansprüchen 1 bis 11, **dadurch gekennzeichnet, daß** die innere und die äußere Hülle zunächst - getrennt voneinander - jeweils zu einer Raupe gerafft, die Raupen unmittelbar hintereinander angeordnet, der entraffte oder nicht geraffte Anfang der inneren Hülle durch den Hohlraum der aus der äußeren Hülle geformten Raupe hindurchgeführt und die Anfangsbereiche der äußeren und der inneren Hülle dann miteinander mechanisch verbunden werden, so daß die Raupen während eines Füllvorgangs gleichzeitig entrafft werden und das Füllgut von zwei Hüllen umgeben ist, die glatt und faltenfrei aneinander liegen.

16. Verwendung der Nahrungsmittelhülle gemäß einem oder mehreren der Ansprüche 1 bis 11 zur Herstellung von Koch- oder Brühwurst, insbesondere von Stapelaufschnitt.

17. Verwendung der gerafften Nahrungsmittelhülle gemäß einem oder mehreren der Ansprüche 12 bis 14 zur Herstellung von Koch- oder Brühwurst, insbesondere von Stapelaufschnitt.

## Claims

1. Tubular food casing from which constituents can be transferred to the food situated therein, **characterized in that** it comprises an outer tubular barrier casing and an inner tubular casing which contains or carries a transferable colorant, aroma substance and/or flavor substance, the two casings lying one above the other being mechanically bonded together only in their respective start region.

2. Food casing according to Claim 1, **characterized in that** the outer layer and the inner layer have approximately the same stuffing caliber.

3. Food casing according to Claim 1 or 2, **characterized in that** the outer casing is a seamless single-layer or multilayer casing made of polymer material having a low permeability to water vapor, oxygen and aroma substances.

4. Food casing according to one or more of Claims 1 to 3, **characterized in that** the outer casing has an oxygen permeability of 1 to 100 cm³/m² bar d, preferably 1 to 10 cm³/m² bar d, determined as specified in DIN 53380, and a water vapor permeability of 1 to 50 g/m² d, preferably 1 to 10 g/m² d, determined as specified in DIN 53122.

5. Food casing according to one or more of Claims 1 to 4, **characterized in that** the outer barrier casing is a casing based on polyamide, polyolefin, polyester, poly(vinylidene chloride) (PVDC), poly(vinyl chloride) (PVC), polystyrene, or corresponding copolymers.

6. Food casing according to one or more of Claims 1 to 5, **characterized in that** the outer barrier casing is multilayered and comprises at least one layer based on polyamide and at least one layer on layer based on polyolefin.

7. Food casing according to one or more of Claims 1 to 6, **characterized in that** the inner casing is produced from regenerated cellulose, a mixture of thermoplastic starch and/or a thermoplastic starch derivative and other polymer, in particular polyurethane, from paper, textile fabric or nonwoven fabric.

8. Food casing according to one or more of Claims 1 to 7, **characterized in that** the colorant, aroma substance and/or flavor substance is a spice or a spice mixture, a spice extract, a liquid smoke or dry smoke, a natural or synthetic aroma and/or a flavor enhancer.

9. Food casing according to one or more of Claims 1 to 8, **characterized in that** the colorant, aroma substance or flavor substance is combined with a binder permitted by food law.

10. Food casing according to Claim 9, **characterized in that** the binder is a polysaccharide, a modified starch, dextran, pullulan, tragacanth gum, xanthan gum, gum arabic, alginate, methyl cellulose, hydroxyethyl cellulose, hydroxypropyl cellulose, carboxymethyl cellulose, chitin, chitosan, a protein (such as gluten), pectin, carrageenan, guar or gelatin.

11. Food casing according to one or more of Claims 1 to 10, **characterized in that** a component which decreases water solubility is added to the colorant, aroma substance or flavor substance and/or the binder.

12. Shirred tubular food casing **characterized in that** it two segments arranged immediately one after the other, which are mechanically bonded together only in their respective start region the first segment consisting of a shirred tubular barrier casing and the second consisting of a tubular casing which contains or carries at least one transferable colorant, aroma substance and/or flavor substance.

13. Shirred tubular food casing according to Claim 12, **characterized in that** the deshirred or non-shirred start of the second casing is passed through the cavity of the first segment and firmly bonded to the start of the tubular barrier casing.

14. Shirred tubular food casing according to Claim 12 or 13, **characterized in that** the starts of the two casings are bound to one another by a plastic clip or metal clip.

15. Process for producing a tubular food casing according to Claims 1 to 11, **characterized in that** the inner and outer casings are first shirred, separately from one another, to form a shirred stick, the shirred sticks are arranged immediately one behind the other, the deshirred or non-shirred start of the inner casing is passed through the cavity of the shirred stick formed by the outer casing and the initial regions of the outer casing and of the inner casing are then mechanically bonded to one another, so that, during a stuffing operation, the shirred sticks are deshirred simultaneously and the stuffing is enclosed by two casings, which lie smoothly and free from creases against one another.

16. Use of the food casing according to one or more of Claims 1 to 11 for producing cooked-meat or scalded-emulsion sausage, in particular stacked slices.

17. Use of the shirred food casing according to one or more of Claims 12 to 14 for producing for producing cooked-meat or scalded-emulsion sausage, in particular stacked slices.

## Revendications

1. Enveloppe pour denrée alimentaire en forme de tuyau dont des composants peuvent être transmis à la denrée alimentaire qui s'y trouve, **caractérisée en ce qu'**elle comprend une enveloppe formant une barrière en forme de tuyau externe et une enveloppe en forme de tuyau interne qui contient ou porte au moins un(e) colorant, parfum et/ou substance gustative transmettable, les deux enveloppes situées l'une sur l'autre n'étant assemblées mécaniquement l'une avec l'autre qu'au niveau de chaque zone de début.

2. Enveloppe pour denrée alimentaire selon la revendication 1, **caractérisée en ce que** l'enveloppe externe et l'enveloppe interne présentent environ le même calibre de remplissage.

3. Enveloppe pour denrée alimentaire selon la revendication 1 ou 2, **caractérisée en ce que** l'enveloppe externe est une enveloppe sans joint, à une ou plusieurs couches en un matériau polymère présentant une faible perméabilité à la vapeur d'eau, à l'oxygène et aux parfums.

4. Enveloppe pour denrée alimentaire selon l'une ou plusieurs des revendications 1 à 3, **caractérisée en ce que** l'enveloppe externe présente une perméabilité à l'oxygène de 1 à 100 cm³/m² bar j , de préférence de 1 à 10 cm³/m² bar j, déterminée selon la norme DIN 53 380, et une perméabilité à la vapeur d'eau de 1 à 50 g/m² j de préférence de 1 à 10 g/m² j, déterminée selon la norme DIN 53 122.

5. Enveloppe pour denrée alimentaire selon l'une ou plusieurs des revendications 1 à 4, **caractérisée en ce que** l'enveloppe externe formant une barrière est une enveloppe à base de polyamide, de polyoléfine, de polyester, de poly(chlorure de vinylidène) (PVDC), de poly(chlorure de vinyle) (PVC), de polystyrène ou de copolymères correspondants.

6. Enveloppe pour denrée alimentaire selon l'une ou plusieurs des revendications 1 à 5, **caractérisée en ce que** l'enveloppe externe formant une barrière est à plusieurs couches et comprend au moins une couche à base de polyamide et au moins une couche à base de polyoléfine.

7. Enveloppe pour denrée alimentaire selon l'une ou plusieurs des revendications 1 à 6, **caractérisée en ce que** l'enveloppe interne est produite à partir de cellulose régénérée, d'un mélange d'amidon thermoplastique et/ou d'un dérivé thermoplastique de l'amidon et d'autres polymères, en particulier de polyuréthane, de papier, de textile ou de non-tissé.

8. Enveloppe pour denrée alimentaire selon l'une ou plusieurs des revendications 1 à 7, **caractérisée en ce que** le colorant, le parfum et/ou la substance gustative est une épice ou un mélange d'épices, un extrait d'épices, une fumée liquide ou sèche, un parfum naturel ou synthétique et/ou un exhausteur de goût.

9. Enveloppe pour denrée alimentaire selon l'une ou plusieurs des revendications 1 à 8, **caractérisée en ce que** le colorant, le parfum ou la substance gustative est combiné avec un liant autorisé selon la loi sur les denrées alimentaires.

10. Enveloppe pour denrée alimentaire selon la revendication 9, **caractérisée en ce que** le liant est un polysaccharide, un amidon modifié, du dextran, du pullulan, de la gomme adragante, de la gomme de xanthane, de la gomme arabique, un alginate, de la méthylcellulose, de l'hydroxyéthylcellulose, de l'hydroxypropylcellulose, de la carboxyméthylcellulose, de la chitine, du chitosane, une protéine, de la pectine, du carraghénane, de la gomme guar ou de la gélatine.

11. Enveloppe pour denrée alimentaire selon l'une ou plusieurs des revendications 1 à 10, **caractérisée en ce que** le colorant, le parfum, la substance gustative et/ou le liant est additionné d'un composant qui diminue la solubilité dans l'eau.

12. Enveloppe pour denrée alimentaire en forme de tuyau, froncée, **caractérisée en ce qu'**elle comprend deux segments froncés disposés directement l'un derrière l'autre, qui ne sont reliés mécaniquement qu'au niveau de leurs zones de début, le premier segment étant constitué par une enveloppe formant une barrière en forme de tuyau et le deuxième par une enveloppe en forme de tuyau qui contient ou porte au moins un(e) colorant, parfum et/ou substance gustative transmettable.

13. Enveloppe pour denrée alimentaire, en forme de tuyau, froncée selon la revendication 12, **caractérisée en ce que** le début défroncé ou non froncé de la deuxième enveloppe est guidé dans l'espace creux du premier segment et est relié solidement, mécaniquement avec le début de l'enveloppe formant une barrière en forme de tuyau.

14. Enveloppe pour denrée alimentaire, en forme de tuyau, froncée selon la revendication 12 à 13, **caractérisée en ce que** les débuts des deux enveloppes sont reliés par une pince en matériau synthétique ou métallique.

15. Procédé de production d'une enveloppe pour denrée alimentaire en forme de tuyau selon les revendications 1 à 11, **caractérisé en ce que** l'enveloppe interne et l'enveloppe externe sont d'abord - séparément l'une de l'autre - froncées en un cordon, les cordons sont disposés directement l'un derrière l'autre, le début défroncé ou non froncé de l'enveloppe interne est passé dans l'espace creux du cordon formé par l'enveloppe externe et les zones de début de l'enveloppe interne et de l'enveloppe externe sont ensuite assemblées mécaniquement l'une avec l'autre de telle manière que les cordons sont défroncés simultanément pendant un processus de remplissage et le produit de remplissage est entouré par deux enveloppes qui sont placées de manière lisse et sans plis l'une contre l'autre.

16. Utilisation de l'enveloppe pour denrée alimentaire selon l'une ou plusieurs des revendications 1 à 11 pour la préparation de saucisse cuite ou de saucisse à cuire, en particulier de charcuterie.

17. Utilisation de l'enveloppe froncée pour denrée alimentaire selon l'une ou plusieurs des revendications 12 à 14 pour la préparation de saucisse cuite ou de saucisse à cuire, en particulier de charcuterie.
